# DEMANDE DE BREVET EUROPEEN

(11) **EP 1 207 097 A1**
(43) Date de publication de la demande: **22.05.2002**
(21) Numéro de dépôt: 01402949.0
(22) Date de dépôt: 16.11.2001
(51) Int. Cl.: B62D 43/08

(54) **Agencement pour le rangement d'une roue de secours**

(30) Priorité: 17.11.2000 FR 0014829
(71) Demandeur: Renault, 92100 Boulogne Billancourt (FR)
(72) Inventeur: Gret, Gilles, 28320 Gallardon (FR); Hewak, Grégor, 95490 Vaureal (FR)

(57) **Abrégé**

L'invention propose un agencement (10) pour le rangement d'une roue de secours à l'intérieur d'un élément (14) de structure de caisse de véhicule automobile, du type dans lequel l'élément (14) de structure de caisse comporte un habitacle (16) qui est agencé en avant d'un compartiment (18) à bagages et du type dans lequel au moins un siège arrière (20), intérieur à l'habitacle (16), comporte un dossier (22) agencé à proximité immédiate du compartiment (18)à bagages, caractérisé en ce que la roue (12) de secours est portée par un support (26) comportant des moyens de maintien de la roue (12) en position sensiblement verticale et transversale, au dos du dossier (22) du siège arrière (20).

## Description

L'invention concerne un agencement pour le rangement d'une roue de secours de véhicule automobile.

L'invention concerne plus particulièrement un agencement pour le rangement d'une roue de secours à l'intérieur d'un élément de structure de caisse de véhicule automobile, du type dans lequel l'élément de structure de caisse comporte un habitacle qui est agencé en avant d'un compartiment à bagages et du type dans lequel au moins un siège arrière, intérieur à l'habitacle, comporte un dossier agencé à proximité immédiate du compartiment à bagages.

On connaît de nombreux exemple d'agencements de ce type, qui permettent par exemple de ranger la roue de secours à l'intérieur de l'élément de structure de caisse de manière qu'elle soit protégée des intempéries tout en demeurant accessible en cas de crevaison.

Selon une première conception, il est connu de ranger la roue en position horizontale dans un logement affleurant avec un plancher du compartiment à bagages du véhicule. Le logement est fermé par une trappe ou par un élément d'habillage du plancher du compartiment à bagages. Toutefois, cette conception présente une accessibilité limitée dans la mesure où il est nécessaire de débarrasser le plancher du compartiment à bagages des éventuels objets qui l'encombrent pour accéder à la roue de secours.

Selon une deuxième conception plus particulièrement adaptée à des véhicules de type sportif, il est connu de ranger la roue de secours en position horizontale, reposant directement sur le plancher du compartiment à bagages du véhicule. Dans cette configuration la roue est accessible soit par une cinquième porte arrière du véhicule, soit directement par l'intérieur de l'habitacle du véhicule. Cette conception présente l'inconvénient d'empiéter notablement sur le volume disponible du compartiment à bagages.

Selon une troisième conception, il est connu de ranger la roue en position verticale fixe le long d'un bord du compartiment à bagages. Un pneumatique de la roue est reçu dans un logement de forme complémentaire du plancher du compartiment à bagages et un voile de la jante de la roue est fixé, par exemple par l'intermédiaire d'une fixation par vis, à une paroi latérale du compartiment à bagages. Cette conception présente l'inconvénient de réduire le volume disponible du coffre et nécessite aussi, si le compartiment à bagages est rempli, de le vider au moins partiellement pour accéder à la roue et pour la dégager de son logement. De plus, cette conception présente l'inconvénient de risquer de salir le compartiment à bagages lorsque l'on range la roue crevée à la place de la roue de secours.

Pour remédier à ces inconvénients, l'invention propose un agencement pour le rangement d'une roue de secours qui est facilement accessible et qui permet d'isoler la roue de secours de façon qu'elle ne salisse pas l'intérieur de l'élément de structure de caisse du véhicule.

Dans ce but, l'invention propose un agencement du type décrit précédemment, caractérisé en ce que la roue de secours est portée par un support comportant des moyens de maintien de la roue en position sensiblement verticale et transversale, au dos du dossier du siège arrière.

Selon d'autres caractéristiques de l'invention :
- le dossier du siège arrière est monté pivotant autour d'un axe transversal agencé à son extrémité inférieure ;
- l'élément de structure de caisse comporte un logement sensiblement complémentaire de la roue, qui est ouvert vers l'avant, et qui est interposé entre le dossier du siège arrière et le compartiment à bagages ;
- le support est porté par une face arrière du dossier du siège arrière ;
- le support est porté par une face transversale de fond du logement ;
- les moyens de maintien de la roue comportent au moins un goujon porté par le support qui est destiné à traverser un trou du voile de la jante de la roue et un écrou associé qui est destiné à immobiliser la roue ;
- le dossier du siège est monté fixe sur l'élément de structure de caisse ;
- le support est constitué d'un panier qui est monté coulissant longitudinalement sur une armature qui est montée pivotante autour d'un axe transversal agencé horizontalement sensiblement au niveau d'une assise du siège ;
- le panier présente sensiblement, en section transversale, la forme d'un L dont la branche inférieure est tournée vers le dossier du siège ;
- l'extrémité libre de la branche inférieure en L du panier est recourbée parallèlement à la branche supérieure en L du panier pour emprisonner un bord inférieur d'un pneumatique de la roue ;
- le panier comporte une poignée de préhension.

D'autres caractéristiques et avantages de l'invention apparaîtront à la lecture de la description détaillée qui suit pour la compréhension de laquelle on se reportera aux dessins annexés dans lesquels :

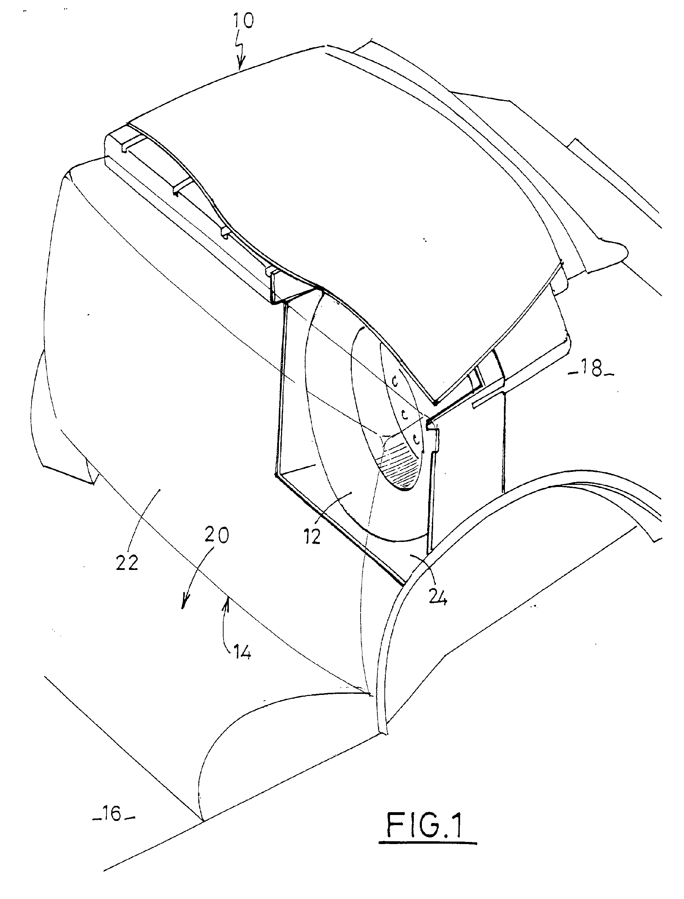

- la figure 1 est une vue d'ensemble en perspective d'un agencement selon l'invention ;
- la figure 2 est une vue schématique en coupe agencement selon un premier mode de réalisation de l'invention représentant la roue en position rangée ;
- la figure 3 est une vue selon la figure 2 représentant la roue en position d'accessibilité ;
- la figure 4 est une vue schématique en coupe agencement selon un deuxième mode de réalisation de l'invention représentant la roue en position rangée ;
- la figure 5 est une vue selon la figure 4 représentant la roue en position d'accessibilité ;
- la figure 6 est une vue schématique en coupe agencement selon un troisième mode de réalisation de l'invention représentant la roue en position rangée ; et
- la figure 7 est une vue selon la figure 6 représentant la roue en position d'accessibilité.

Dans la description qui va suivre, des chiffres de référence identiques désignent des pièces identiques ou ayant des fonctions similaires.

On a représenté sur les figures l'ensemble d'un agencement 10 pour le rangement d'une roue de secours 12 à l'intérieur d'un élément 14 de structure de caisse de véhicule automobile.

De manière connue, l'élément 14 de structure de caisse comporte un habitacle 16 qui est agencé en avant d'un compartiment 18 à bagages. Au moins un siège arrière 20, intérieur à l'habitacle 16, comporte un dossier 22 qui est agencé à proximité immédiate du compartiment 18 à bagages.

Conventionnellement, la roue de secours 12 est agencée en position horizontale dans un logement pratiqué dans le compartiment à bagages, accessible de l'intérieur de celui-ci, ou bien dans un panier qui est accroché à l'extérieur du véhicule sous ledit compartiment à bagages.

Une telle conception ne permet qu'un accès peu aisé à la roue de secours 12.

Pour remédier à cet inconvénient, conformément à l'invention, la roue de secours 12 est portée par un support comportant des moyens de maintien de la roue 12 en position sensiblement verticale et transversale, au dos du dossier 22 du siège arrière 20.

Dans le cadre de la réalisation de l'invention deux configurations peuvent être envisagées.

Selon une première configuration, le dossier 22 du siège arrière 20 est monté pivotant autour d'un axe A transversal qui agencé à son extrémité inférieure.

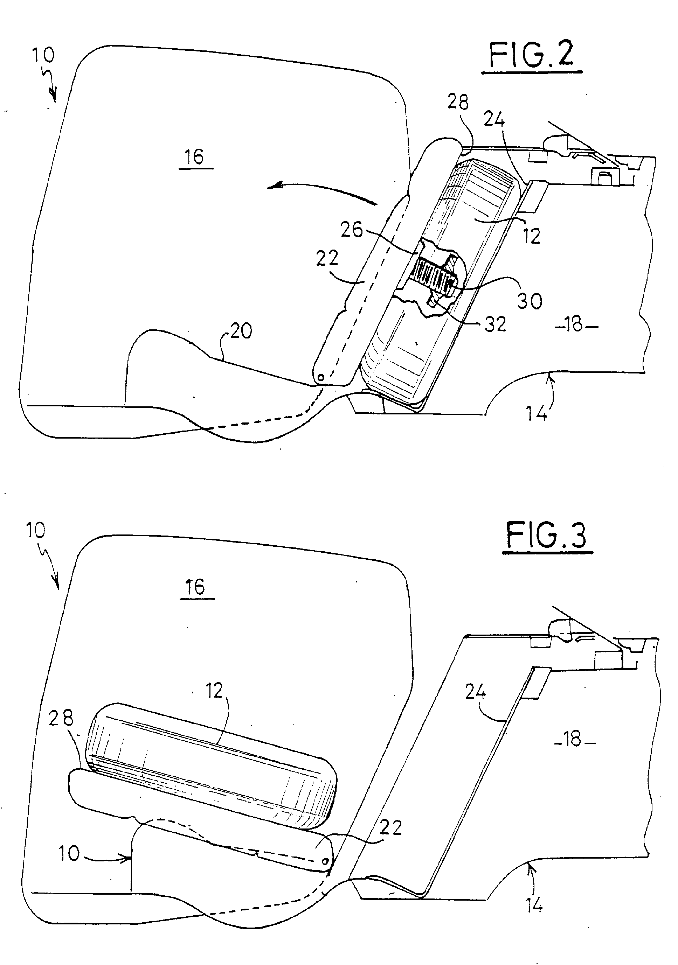

Dans cette configuration, qui est représentée aux figures 2 à 5, il existe deux modes de réalisation de l'invention.

Dans ces deux modes de réalisation, l'élément 14 de structure de caisse comporte un logement 24 qui présente une forme sensiblement complémentaire de la roue 12 qui est ouvert vers l'avant, c'est à dire vers l'habitacle 16, et qui est interposé entre le dossier 22 du siège arrière 20 et le compartiment 18 à bagages. Le logement 24 est par exemple réalisé à partir d'un caisson en tôle qui est soudé sur l'élément 14 de structure de caisse.

Selon un premier mode de réalisation qui est représenté aux figures 2 et 3, le support 26 est porté par une face arrière 28 du dossier 22 du siège arrière 20. Le support 26 est agencé en regard du logement 24 de sorte qu'en position rangée, la roue 12 est entièrement reçue dans le logement 24 comme l'illustre la figure 2.

Le support 26 comporte des moyens de maintien pour la fixation de la roue 12 sur la face arrière 28 du dossier 22 du siège 20.

A cet effet, comme l'illustre la figure 2, les moyens de maintien comportent par exemple au moins un goujon 30 qui est porté par le support 26 en forme d'embase cylindrique. Le goujon 30 s'étend perpendiculairement à partir la face arrière 28 du dossier 22 et il est destiné à traverser un trou du voile de la jante (non représenté) de la roue 12 pour la bloquer à l'aide d'un écrou associé 32. Cette disposition n'est pas limitative de l'invention et tout autre moyen de maintien de la roue 12 peut être envisagé dans le cadre de l'invention pour la fixation de la roue sur le support 26.

De la sorte, pour pouvoir disposer de la roue de secours 12, il suffit de basculer le dossier 22 du siège arrière 12 dans le sens de la flèche de la figure 3 et de dévisser l'écrou 32 précédemment décrit pour séparer la roue 12 du dossier 22.

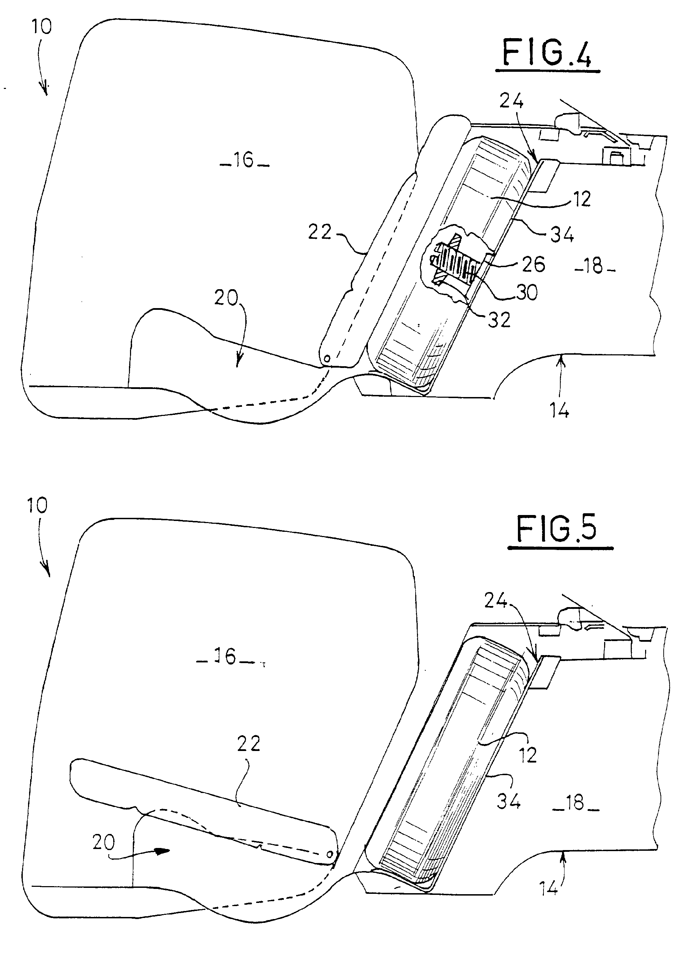

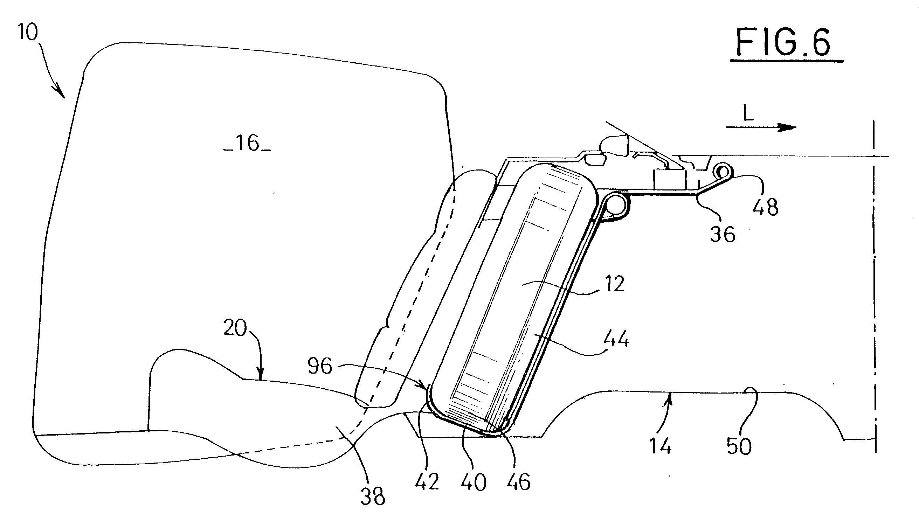

Selon un deuxième mode de réalisation qui est représenté aux figures 4 et 5, le support 26 est porté par une face transversale 34 de fond du logement 24.

D'une manière analogue au précédent mode de réalisation, les moyens de maintien comportent par exemple au moins un goujon 30 qui est porté par le support 26 en forme d'embase cylindrique. Le support 26 et le goujon 30 s'étendent perpendiculairement à partir de la face 34 de fond du logement 24 et le goujon 30 est destiné à traverser un trou du voile de la jante (non représenté) de la roue 12 pour la bloquer à l'aide d'un écrou associé 32. Cette disposition n'est pas limitative de l'invention et tout autre moyen de maintien de la roue 12 peut être envisagé dans le cadre de l'invention pour la fixation de la roue 12 sur le support 26.

De la sorte, la roue 12 étant entièrement reçue dans le logement 24 comme l'illustre la figure 4, il suffit, pour pouvoir disposer de la roue de secours 12, de basculer le dossier 22 du siège arrière 12 dans le sens de la flèche de la figure 5, puis de dévisser l'écrou 32 précédemment décrit, puis enfin d'extraire la roue 12 du logement 24.

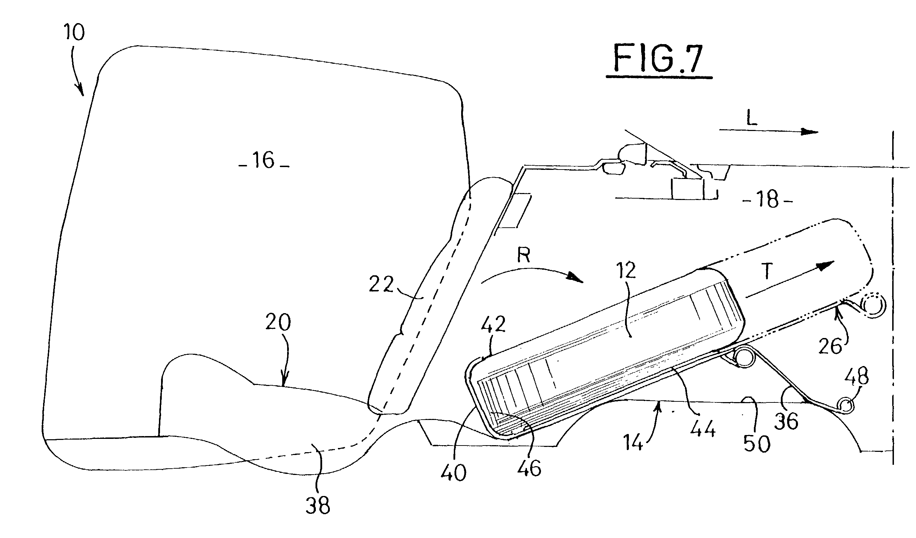

Comme l'illustrent les figures 6 et 7, selon une deuxième configuration, le dossier 22 du siège arrière 20 est monté fixe sur l'élément 14 de structure de caisse.

Dans cette configuration, l'accès à la roue de secours 12 s'effectue par une couvercle (non représenté) du compartiment 18 à bagages. Comme l'illustre la figure 7, le support 26 est constitué d'un panier qui reçoit la roue 12 et qui est monté coulissant longitudinalement suivant la direction longitudinale L sur une armature 36 qui est montée pivotante autour d'un axe transversal (non représenté) agencé horizontalement sensiblement au niveau d'une assise 38 du siège 20.

Plus précisément, le panier 26 formant support présente sensiblement, en section transversale, la forme d'un L dont la branche inférieure 40 est tournée vers le dossier du siège. L'extrémité libre 42 de la branche inférieure 40 en L du panier 26 est recourbée parallèlement à la branche supérieure 44 en L du panier pour emprisonner un bord inférieur 46 d'un pneumatique de la roue 12.

Enfin, pour faciliter la préhension du panier 26, celui-ci comporte une poignée 48 de préhension qui est par exemple agencée à l'extrémité libre de la branche supérieure 44 du panier en L.

De la sorte, à partir d'une position de rangement au dos du dossier 22 qu'occupe la roue 12 comme représenté à la figure 6, il suffit, pour avoir accès à la roue 12, de basculer le panier 26 et le support 36 dans le sens de la flèche R de la figure 7 puis, l'armature 48 reposant sur le plancher 50 du compartiment 18 à bagages 18, de tirer le panier 26 dans le sens de la flèche T de la figure 7 pour faire coulisser le panier 26 dans la direction L le long de l'armature 36.

L'invention permet un accès aisé à la roue de secours 12 d'un véhicule automobile, particulièrement adapté à un véhicule sportif de type cabriolet ou spider.

## Revendications

1. Agencement (10) pour le rangement d'une roue de secours à l'intérieur d'un élément (14) de structure de caisse de véhicule automobile, du type dans lequel l'élément (14) de structure de caisse comporte un habitacle (16) qui est agencé en avant d'un compartiment (18) à bagages et du type dans lequel au moins un siège arrière (20), intérieur à l'habitacle (16), comporte un dossier (22) agencé à proximité immédiate du compartiment (18)à bagages,
**caractérisé en ce que** la roue (12) de secours est portée par un support (26) comportant des moyens de maintien de la roue (12) en position sensiblement verticale et transversale, au dos du dossier (22) du siège arrière (20).

2. Agencement (10) selon la revendication précédente, **caractérisé en ce que** le dossier (22) du siège arrière (20) est monté pivotant autour d'un axe (A) transversal agencé à son extrémité inférieure.

3. Agencement (10) selon l'une des revendications précédentes, **caractérisé en ce que** l'élément (14) de structure de caisse comporte un logement (24) sensiblement complémentaire de la roue (12), qui est ouvert vers l'avant, et qui est interposé entre le dossier (22) du siège arrière (20) et le compartiment (18) à bagages.

4. Agencement (10) selon la revendication précédente prise en combinaison avec la revendication 2, **caractérisé en ce que** le support (26) est porté par une face arrière (28) du dossier (22) du siège arrière (20).

5. Agencement (10) selon la revendication 3, **caractérisé en ce que** le support (26) est porté par une face transversale (34) de fond du logement (24).

6. Agencement (10) selon l'une des revendications 4 ou 5, **caractérisé en ce que** les moyens de maintien de la roue comportent au moins un goujon (30) porté par le support (26) qui est destiné à traverser un trou du voile de la jante de la roue (12)et un écrou associé (32) qui est destiné à immobiliser la roue (12).

7. Agencement (10) selon la revendication 1, **caractérisé en ce que** le dossier (22) du siège est monté fixe sur l'élément (14) de structure de caisse.

8. Agencement (10) selon la revendication précédente, **caractérisé en ce que** le support (26) est constitué d'un panier qui est monté coulissant longitudinalement sur une armature (36) qui est montée pivotante autour d'un axe transversal agencé horizontalement sensiblement au niveau d'une assise (38) du siège (20).

9. Agencement (10) selon la revendication précédente, **caractérisé en ce que** le panier (26) présente sensiblement, en section transversale, la forme d'un L dont la branche inférieure (40) est tournée vers le dossier (22) du siège (20).

10. Agencement (10) selon la revendication précédente, **caractérisé en ce que** l'extrémité libre (42) de la branche inférieure (40) en L du panier (26) est recourbée parallèlement à la branche supérieure (44) en L du panier pour emprisonner un bord inférieur (46) d'un pneumatique de la roue (12).

11. Agencement (10) selon l'une des revendications 8 à 10, **caractérisé en ce que** le panier (26) comporte une poignée (48) de préhension.
